# FASCICULE DE BREVET EUROPEEN

(11) **EP 0 772 009 B1**
(45) Date de publication et mention de la délivrance du brevet: **22.05.2002**
(21) Numéro de dépôt: 96402293.3
(22) Date de dépôt: 29.10.1996
(51) Int. Cl.: F24F 13/24, F24F 13/02

(54) **Gaine de ventilation et panneau isolant utilisé pour son revêtement**
Lüftungskanal und Isolierplatten für seine Auskleidung
Insulating panels used as a lining of ventilation duct

(30) Priorité: 03.11.1995 FR 9512986; 14.12.1995 SE 9504476
(43) Date de publication de la demande: 07.05.1997
(73) Titulaire: SAINT-GOBAIN ISOVER, 92400 Courbevoie (FR)
(72) Inventeur: Lardillat, Alain, 92400 Courbevoie (FR); Melinand, Alain, 71100 Chalon sur Saone (FR); Tigerfeldt, Claes Staffan, 25284 Hesingborg (SE)
(74) Mandataire: Goldenberg, Virginie Isabelle

(56) Documents cités:
- EP-A- 0 074 486
- WO-A-82/03248
- DE-A- 1 679 519
- FR-A- 2 468 076

## Description

La présente invention concerne une gaine de ventilation comprenant une enveloppe intérieurement revêtue d'au moins un panneau isolant et concerne le panneau en question.

Les panneaux isolants habituellement utilisés pour tapisser l'intérieur des gaines de ventilation se présentent généralement sous forme d'un feutre ou matelas de laine minérale (laine de verre ou laine de roche) éventuellement revêtu d'une feuille de matière minérale (par exemple un tissu ou voile de verre ou une feuille d'aluminium) sur sa face « interne » (face destinée à se trouver du côté du passage de l'air dans la gaine) et/ou sur la face opposée à celle-ci. Cette feuille permet par exemple d'éviter l'érosion du feutre de laine minérale et/ou lui confère certaines propriétés thermiques, mécaniques et/ou acoustiques.

Dans des gaines de ventilation connues, le ou les panneaux isolants sont montés par collage ou clouage à l'intérieur de la gaine, ces montages étant parfois longs et peu pratiques (notamment le montage par collage). Les panneaux isolants peuvent également être assemblés par l'intermédiaire de profilés permettant entre autres de maintenir ces panneaux dans une position stable au sein de la gaine. De tels assemblages de panneaux et de profilés sont ainsi décrits dans le brevet DE 1 679 519 (parallèlement, il est connu de maintenir des panneaux entre des éléments tubulaires juxtaposés dans le domaine des dispositifs utilisés pour atténuer le bruit des ventilateurs comme décrit dans le document WO82/03248). Les panneaux sont montés côte à côte dans la gaine de façon à assurer une bonne isolation et délimitent le canal d'écoulement de la gaine. Les gaines connues présentent cependant souvent des problèmes d'usure et/ou d'isolation (problèmes d'étanchéité, de condensation - notamment lorsque ces gaines sont utilisées dans des installations de climatisation - création de ponts thermiques etc...) aux endroits de contact des panneaux entre eux, notamment à la jonction des panneaux consécutifs d'une même face de la gaine.

La présente invention remédie aux inconvénients précédemment mentionnés. Elle propose une gaine de ventilation améliorée ne présentant pas de problèmes d'érosion ou d'isolation et étant préférentiellement de montage aisé. La présente invention propose également un panneau isolant amélioré utilisable pour réaliser la gaine selon l'invention.

La gaine de ventilation selon l'invention comprend une enveloppe intérieurement revêtue d'au moins un panneau isolant, ce panneau présentant au moins un revêtement sur au moins une partie d'au moins une de ses arêtes transversales placées du côté du canal d'écoulement de la gaine, ce revêtement s'étendant sur au moins une partie de chacune des faces de part et d'autre de l'arête et étant intégré au panneau.

Le panneau isolant selon l'invention destiné au revêtement interne d'une gaine de ventilation présente un revêtement sur au moins une partie d'au moins une de ses arêtes, ce revêtement s'étendant sur au moins une partie de chacune des faces de part et d'autre de l'arête et étant intégré au panneau.

Par « gaine de ventilation », on entend une gaine ou canalisation pour le transport de l'air, cette gaine pouvant faire partie par exemple d'une installation de climatisation, d'une installation de chauffage ou d'une installation de ventilation proprement dite.

L'enveloppe de la gaine est généralement métallique ou en béton maçonné et présente, dans la mesure du possible, une section « simple » (de préférence rectangulaire ou carrée, éventuellement cylindrique). Elle peut également se présenter sous forme d'un coude ou comprendre une ou des parties coudées et peut présenter des décrochements, des angles, des changements de section, etc... Cette enveloppe peut également présenter des portions ou sections ouvertes mettant une partie plus ou moins importante du ou des panneaux directement en contact avec l'environnement extérieur de la gaine et peut même se limiter simplement à une armature à la jonction des panneaux isolants. Notamment (cas par exemple des gaines destinées à être montées dans des faux plafonds), l'enveloppe peut simplement consister en un ou plusieurs profilés en T, cintrés ou non, se trouvant à la jonction des panneaux, l'âme de ces profilés étant placée entre les panneaux et les ailes recouvrant les bords des faces des panneaux tournées vers l'extérieur de la gaine.

Les panneaux isolants définis dans la présente invention sont ou comprennent de préférence des feutres ou matelas de laine minérale, notamment de laine de verre ou laine de roche. Il peut cependant également s'agir de mousses isolantes ou autres produits similaires plutôt rigides et présentant de bonnes propriétés d'isolation. Les panneaux peuvent présenter plusieurs couches (ou matelas) de matière isolante, éventuellement séparées par des couches ou feuilles de matière différente ou similaire. Ces panneaux sont munis d'au moins un revêtement se présentant préférentiellement sous la forme d'une feuille souple ou d'un élément rigide (tel qu'un profilé comme explicité ultérieurement) en au moins une partie d'au moins une de leurs arêtes, ce revêtement couvrant au moins une partie de chacune des faces situées de part et d'autre de l'arête (l'arête étant commune à deux faces du panneau), l'arête étant destinée à être une arête « transversale » en position montée du panneau dans la gaine. Par « transversal(e) » on entend « transversal(e) à la direction d'écoulement de la gaine ». L'arête en question est également destinée à être placée du côté (sur le pourtour) du canal d'écoulement de la gaine. Le revêtement du panneau selon l'invention couvre ainsi un bord au moins de la face interne du panneau et vient recouvrir (reborder) le bord au moins du côté (ou face) « transversal » (c'est-à-dire présentant quatre arêtes transversales dont l'une se trouve sur le pourtour du canal d'écoulement de la gaine) adjacent au bord de la face interne revêtue. Par « face interne », on entend, comme indiqué précédemment, la face tournée ou destinée à être tournée vers le canal d'écoulement de la gaine, c'est-à-dire du côté du passage de l'air dans la gaine, c'est-à-dire généralement vers le centre de la gaine. Le revêtement couvre avantageusement au moins la partie de l'arête destinée à être exposée à l'air en circulation dans la gaine et couvre généralement la totalité de l'arête.

D'autre part, le revêtement est intégré (ou « monté à demeure ») au panneau ; il fait partie du panneau et est lié à la matière isolante présente dans le panneau de façon à obtenir, notamment, une structure cohérente, manipulable, favorisant le moins possible l'apparition de problèmes d'isolation (condensation, etc...). Cette intégration se fait de préférence par « ancrage » (le revêtement, notamment lorsqu'il est sous forme d'un élément rigide, pénètre par exemple en l'une de ses extrémités dans la matière isolante du panneau) ou collage d'au moins une partie du revêtement (notamment lorsque le revêtement se présente sous forme d'une feuille souple).

De préférence, le panneau présente un revêtement tel que défini selon l'invention en chacune (ou partie de chacune) de ses arêtes destinées à être placées du côté du canal d'écoulement de la gaine et transversalement à la direction d'écoulement de la gaine.

La gaine et les panneaux selon l'invention présentent de multiples avantages. Ils présentent notamment une meilleure résistance à l'érosion et l'isolation au sein de la gaine est améliorée, la protection des bords des panneaux se trouvant du côté du passage de l'air étant particulièrement renforcée du fait de la présence du revêtement défini selon l'invention. La préhension des panneaux et le confort de pose sont également améliorés.

En règle générale, les panneaux isolants définis dans la présente invention sont déjà recouverts, sur leur face interne, d'une feuille de protection, cette feuille pouvant protéger les panneaux de l'usure et pouvant, le cas échéant, présenter d'autres propriétés : étanchéité, réduction du frottement de l'air, résistance mécanique, renforcement du caractère isolant acoustique ou thermique, effet de membrane, etc... Cette feuille est généralement une feuille de matière minérale. Elle peut par exemple être un voile ou un tissu de verre, imprégné ou non d'un liant organique ou inorganique, mais peut être également une feuille d'aluminium, etc...

Les panneaux peuvent être également revêtus d'une feuille de matière minérale en leur face opposée à la face interne (face externe), cette feuille étant identique ou différente à la feuille de protection précédemment citée et présentant les mêmes propriétés ou des propriétés différentes. Les feuilles revêtant les panneaux selon l'invention sont généralement collées auxdits panneaux, par exemple par l'intermédiaire du liant imprégnant les feuilles.

Selon un mode de réalisation de la présente invention, les panneaux définis selon l'invention sont revêtus sur leur face interne d'une telle feuille de protection au moins et sont « rebordés» (c'est-à-dire que la feuille recouvrant la face interne vient recouvrir également au moins une partie d'une face adjacente) par la feuille en au moins une partie d'un des côtés devant être placé transversalement à la direction d'écoulement de la gaine, ce côté étant adjacent à la face interne. Dans ce cas, le revêtement défini selon l'invention est constitué par la feuille de protection venant ainsi reborder au moins un coin du panneau exposé au passage de l'air. De préférence, les panneaux rebordés utilisés ou utilisables dans la gaine selon l'invention sont des panneaux revêtus par une feuille de protection sur leur face interne et en au moins un de leur côté destiné à être positionné transversalement à la direction d'écoulement de la gaine ainsi que sur la partie de la face externe adjacente audit côté. De préférence également, les panneaux isolants selon l'invention sont rebordés par la feuille de protection en leurs deux côtés transversaux à la direction d'écoulement de la gaine.

Dans ce mode de réalisation, il est possible d'augmenter les vitesses de circulation de l'air au sein des gaines selon l'invention sans risques d'arrachement de fibres des panneaux ou même d'arrachement de la feuille de protection revêtant la face interne des panneaux. Ces panneaux sont obtenus, par exemple, en fabriquant selon des méthodes habituelles et connues un ruban continu de feutre de laine minérale que l'on collecte sur un convoyeur, puis en appliquant sur la face inférieure de ce ruban une feuille de protection imprégnée d'un liant assurant le collage de la feuille au feutre, puis en rebordant les faces latérales et une partie de la face supérieure du ruban par l'intermédiaire de guides où de molettes déflecteurs-conformateurs. Le ruban est ultérieurement découpé sous forme de panneaux isolants en conservant au moins un des côtés rebordés du feutre dans chaque panneau.

Selon un autre mode de réalisation de l'invention, le panneau utilisé, muni ou non d'une feuille de protection sur sa face interne (et/ou sur sa face externe) rebordant ou non ce panneau, présente au moins un revêtement sous forme d'un profilé à section en U dont l'âme recouvre une partie d'un côté du panneau destiné à être monté transversalement à la direction d'écoulement de la gaine, dont l'une des ailes pénètre (rentre en force) dans le matériau isolant du panneau et dont l'autre aile couvre une partie de la face interne du panneau.

De préférence, le panneau présente au moins un revêtement sous forme d'un profilé à section en U sur une partie de chacun des côtés transversaux du panneau (le panneau est alors muni de deux profilés par exemple), chaque profilé étant placé comme indiqué dans le paragraphe précédent.

Les panneaux selon l'invention peuvent être collés, cloués ou « clipsés » à l'intérieur de la gaine. De préférence cependant, la gaine comprend au moins un profilé d'assemblage des panneaux et les panneaux sont montés de façon simple, rapide et pratique, par l'intermédiaire du ou des profilés d'assemblage. Le ou les profilés d'assemblage sont généralement métalliques, ou éventuellement en matière plastique, et présentent, de préférence, une forme de Z, c'est-à-dire présentent une âme et deux ailes, chaque aile étant à une extrémité différente de l'âme et les deux ailes étant de part et d'autre du plan passant par l'âme. Ce ou ces profilés servant au maintien du ou des panneaux sont placés longitudinalement dans la direction d'écoulement de la gaine. Les profilés d'assemblage en Z sont particulièrement appropriés lorsque les gaines selon l'invention se présentent sous forme de quadrilatères et sont intérieurement revêtues par un ou des ensembles de quatre panneaux. Le montage des panneaux dans la gaine se fait alors, par exemple, de la façon suivante : un premier panneau est posé sur la face inférieure de la gaine et deux profilés en Z sont placés chacun sur un bord du panneau dans le sens d'écoulement de la gaine ; les panneaux latéraux sont ensuite placés chacun sur un des profilés et deux autres profilés en Z viennent chacun coiffer l'un des panneaux latéraux. Le dernier panneau vient se glisser dans les parties supérieures des deux derniers profilés en Z. Le ou les ensembles consécutifs de quatre panneaux sont ainsi maintenus par un ou des ensembles consécutifs de quatre profilés en Z.

Les profilés d'assemblage en Z s'adaptent à tous les types de gaine mentionnés précédemment ; il est notamment possible de cintrer ces profilés pour qu'ils puissent épouser les courbes des gaines en coupant suivant une génératrice les deux ailes des profilés dans le sens de la largeur et en pliant l'âme du profilé le long de cette même génératrice. On peut ainsi faire plusieurs pliures à des angles plus ou moins faibles ou importants en suivant la courbure de la gaine. De la même façon, les panneaux isolants selon l'invention peuvent être légèrement cintrés ou pliés suivant une entaille (par exemple une entaille en V) pratiquée dans les panneaux, de façon à suivre les courbes ou angles de la gaine.

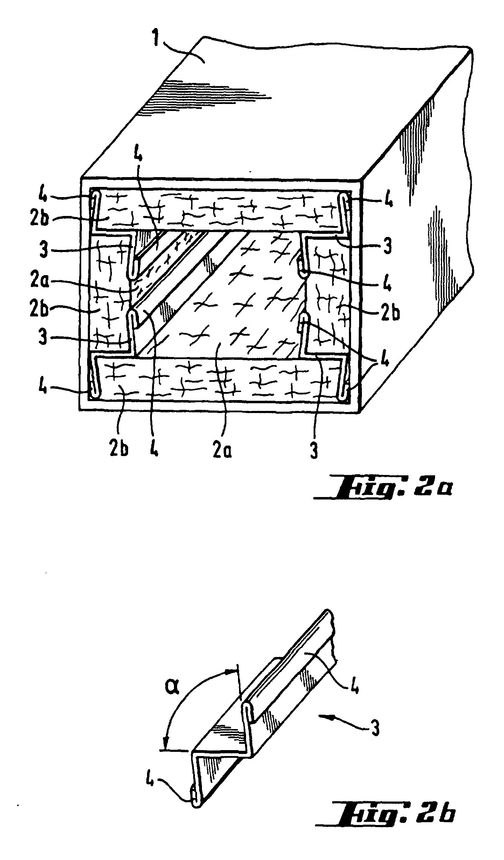

Selon un mode de réalisation de l'invention particulièrement préféré, les profilés d'assemblage en Z utilisés dans la gaine selon l'invention présentent au moins une aile et de préférence des ailes dont l'extrémité libre est rabattue vers « l'extérieur », c'est-à-dire du côté de l'aile non tourné vers l'âme. Contrairement aux profilés en Z classiques, ces profilés en Z aux extrémités repliées ne présentent pas de bords coupants risquant notamment d'accrocher les panneaux isolants mais présentent des bords arrondis plus sécurisants et permettant un meilleur montage. De plus, de tels profilés en Z aux bords repliés ne posent pas les problèmes de condensation qui peuvent éventuellement se poser avec les profilés en Z traditionnels ; en effet grâce au renflement formé par chaque extrémité repliée, les profilés en Z prennent normalement appui uniquement en deux points de l'enveloppe de la gaine, ce qui empêche l'emprisonnement d'air à cet endroit et la condensation de l'air entre des éléments de la gaine généralement métalliques. L'angle entre chaque aile et l'âme du profilé est choisi de façon à permettre le positionnement voulu des panneaux isolants dans la gaine et est généralement proche de 90°. De préférence, particulièrement dans le cas des profilés d'assemblage en Z présentant au moins un bord replié, l'angle entre chaque aile et l'âme du profilé est légèrement inférieur à 90°. Par exemple, dans le cas des profilés en Z présentant au moins un bord replié, cet angle aigu est choisi, comme illustré ultérieurement à la figure 2, de façon à ce que l'extrémité du renflement et l'extrémité de l'âme du profilé soient alignés suivant une perpendiculaire à l'âme, cette construction permettant d'assembler deux panneaux perpendiculairement l'un à l'autre. Le choix d'un angle légèrement inférieur à 90° entre l'âme et chaque aile du profilé permet également d'obtenir, le cas échéant, un léger pincement des panneaux et donc un meilleur maintien de ces panneaux.

Dans le cas de gaines particulièrement longues revêtues intérieurement de plusieurs ensembles de panneaux consécutifs, la jonction de deux panneaux consécutifs utilisés pour tapisser une même face de la gaine peut être améliorée par l'intermédiaire d'autres profilés d'assemblage, notamment lorsque l'un des panneaux n'est revêtu que sur un des côtés et est en contact avec un autre panneau sur son côté non revêtu. Le profilé utilisé peut être un profilé en Z auquel cas l'âme du profilé se trouve entre les deux panneaux et une des ailes du profilé recouvre une partie de la face interne du profilé présentant le côté non revêtu. Ce mode de réalisation présente l'avantage de ne nécessiter qu'un type de profilé d'assemblage dans la gaine. On peut cependant utiliser plus simplement et avantageusement un profilé en T dont l'âme se trouve entre les deux panneaux et les ailes recouvrent les bords des faces internes des deux panneaux. Ce mode est particulièrement avantageux lorsque les deux panneaux sont revêtus en un seul côté et que le contact entre les deux panneaux se fait sur leur côté non revêtu. Le- profilé en T utilisé peut éventuellement être légèrement cintré suivant les courbures de la gaine.

Dans le cas de gaines présentant au moins une coulisse (ensemble comprenant au moins deux panneaux d'isolation utilisé pour partager le canal d'écoulement de la gaine en plusieurs canaux), la protection de la ou des coulisses peut encore être améliorée au moyen de profilés d'assemblage en Z, notamment de deux profilés en Z dont l'âme se trouve dans un même plan sur le chant des panneaux, les deux profilés étant assemblés chacun le long d'une de leurs ailes et les deux ailes restantes enserrant les deux panneaux isolants comme illustré ultérieurement. L'utilisation de ces profilés dans ce cas évite également le passage de l'air entre les deux panneaux constituant les coulisses. On peut également utiliser d'autres protections (tel qu'un élément à base de matière isolante en forme de demi-cylindre plein que l'on protège à l'aide de profilés, par exemple à l'aide de profilés en Z) et/ou d'autres profilés (profilé en U), ce mode de réalisation présentant simplement le désavantage de nécessiter d'autres types d'éléments ou de profilés.

D'autres avantages et caractéristiques de l'invention apparaîtront à la lumière des dessins suivants illustrant l'invention, sans toutefois la limiter, dans lesquels :
- **les figures 1a et 1b** représentent des vues schématiques en perspective d'une extrémité de gaine selon l'invention, cette gaine étant munie d'un revêtement interne comprenant des panneaux isolants et des profilés d'assemblage en Z, les deux figures illustrant deux arrangements différents possibles des profilés et des panneaux isolants à l'intérieur de la gaine,
- **la figure 2a** représente une vue schématique en perspective d'une extrémité d'une gaine préférée selon l'invention munie d'un revêtement interne comprenant des panneaux isolants et des profilés d'assemblage en Z présentant des bords repliés ; **la figure 2b** représente une vue schématique du type de profilé utilisé dans cette gaine,
- **la figure 3a** représente une vue schématique en perspective d'un ruban continu de feutre de laine minérale revêtu sur une face d'une feuille de protection et rebordé, dans lequel on découpe des panneaux isolants, la **figure 3b** représentant une partie du revêtement interne d'une gaine selon l'invention réalisée à partir desdits panneaux isolants découpés,
- **la figure 4** représente une vue schématique en perspective d'une gaine coudée selon l'invention, **les figures 5a et 5b, 6a et 6b** représentant les profilés d'assemblage utilisés dans cette gaine avant et après découpe de leurs ailes et cintrage,
- **la figure 7a** représente une vue schématique de dessus d'une gaine selon l'invention, une partie du revêtement interne de cette gaine étant représenté en perspective **figure 7b**,
- **la figure 8** représente une vue schématique en perspective d'une extrémité d'une gaine selon l'invention présentant une coulisse,
- **la figure 9** représente une vue de dessus (la partie supérieure de l'enveloppe et les panneaux supérieurs étant ôtés) d'un assemblage de gaines selon l'invention et la **figure 10** représente un agrandissement de la partie A de la figure 9,
- **la figure 11** représente une vue schématique en perspective d'une extrémité d'une gaine similaire à celles de la figure 9.

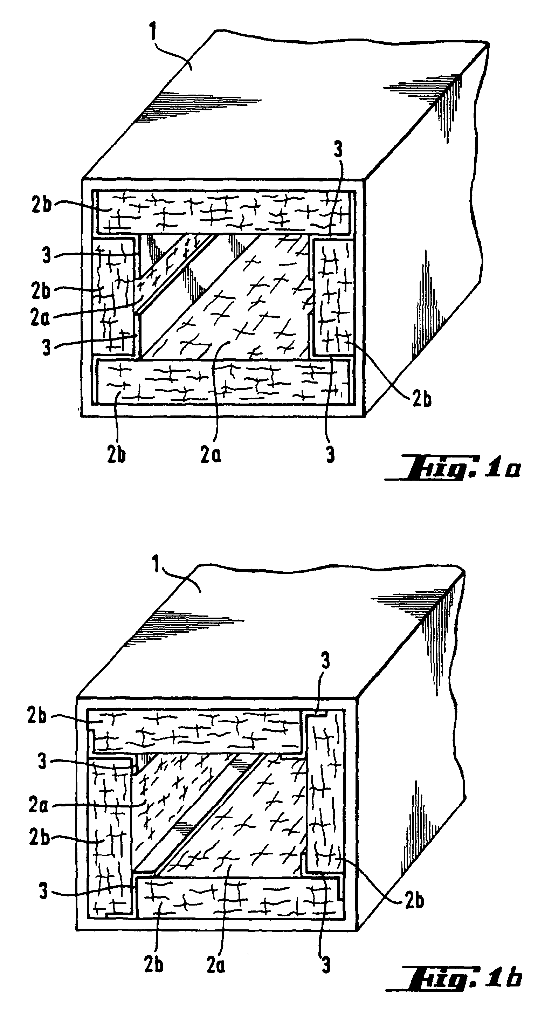

La gaine représentée figure 1a ou figure 1b comprend une enveloppe métallique 1, un ou plusieurs ensembles de quatre panneaux isolants en laine de verre revêtus sur leur face interne (2a) d'une feuille de protection en voile de verre et rebordés sur leur côté transversal apparent (2b) par ladite feuille, et comprend quatre profilés métalliques d'assemblage 3 en Z permettant de maintenir les panneaux isolants dans la gaine. Les ailes des profilés utilisés peuvent être de la même longueur que le chant des panneaux isolants (figure 1a) ou peuvent être de dimension plus faible (figure 1b).

La gaine représentée en figure 2a correspond à la gaine représentée en figure 1a dans laquelle les profilés d'assemblage en Z « classiques » ont été remplacés par des profilés en Z particuliers dont les ailes sont repliées en leur extrémité libre de façon à former un renflement 4 ; ces profilés particuliers prennent appui sur l'enveloppe de la gaine en deux points (l'extrémité du renflement et l'âme du profilé) et permettent d'éviter les problèmes de condensation entre la paroi métallique et les profilés. Chaque profilé présente également un angle α entre chaque aile et l'âme légèrement inférieur à 90° de façon à permettre un positionnement de l'âme du profilé parallèlement à une face de la gaine et le positionnement des panneaux perpendiculairement les uns aux autres tout en effectuant un léger pincement des panneaux.

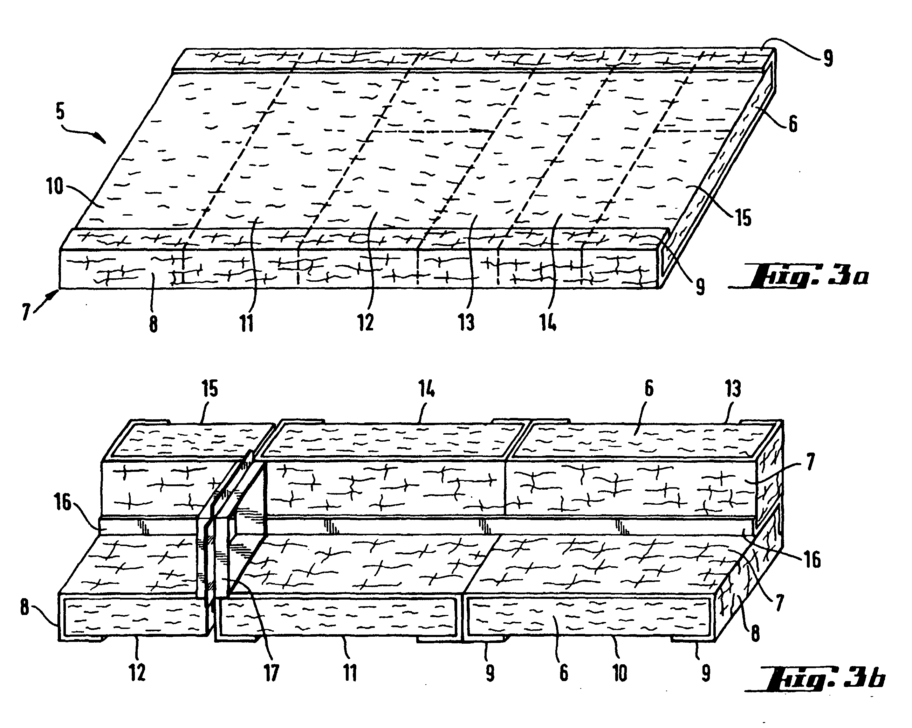

La figure 3a représente un ruban 5 de feutre minéral 6 revêtu d'une feuille de protection 7 collée et rebordé, le ruban de feutre minéral étant obtenu selon des méthodes connues et le rebordement étant effectué par l'intermédiaire de molettes déflecteurs-conformateurs après application d'une feuille de protection sur la face inférieure du ruban, cette feuille étant plus large que la face en question. Le rebordement se fait sur les faces latérales 8 dans la direction de défilement du ruban et sur les parties 9 de la face supérieure adjacentes à ces faces latérales. Des panneaux 10, 11, 12, 13, 14, 15 sont ensuite découpés suivant les pointillés indiqués en figure 3a pour revêtir intérieurement l'enveloppe d'une gaine de section rectangulaire afin d'obtenir une gaine selon l'invention. Cette gaine est réalisée (figure 3b) en posant le nombre nécessaire de panneaux (10, 11, 12) pour tapisser la face inférieure de la gaine, sur l'enveloppe (non représentée) de la gaine, le ou les côtés rebordés des panneaux étant disposés transversalement au passage de l'air et les faces principales revêtues de la feuille de protection étant tournées vers l'intérieur de la gaine, puis en posant des profilés d'assemblage 16 en Z (présentant éventuellement des bords repliés) sur les bords longitudinaux de ces panneaux (profilés sur le devant de la figure non représentés), puis en posant les panneaux isolants latéraux (13, 14, 15) sur les profilés (panneaux de devant non représentés) avant d'intercaler à nouveau des profilés et de poser les panneaux supérieurs (non représentés). Des panneaux (12, 15) de longueur plus petite que la largeur standard du ruban de feutre étant utilisés dans ce mode de réalisation, ces panneaux ne présentant par conséquent qu'un côté rebordé, sont protégés en leur côté non rebordé par un profilé d'assemblage 17 à section en T (entièrement représenté) intercalé entre ces panneaux et les panneaux consécutifs.

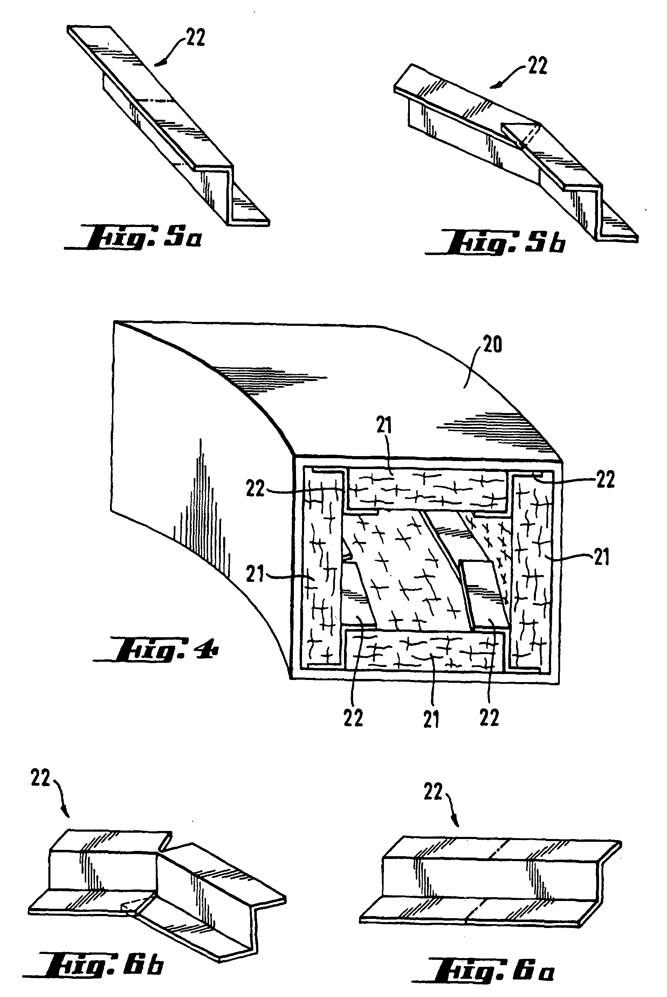

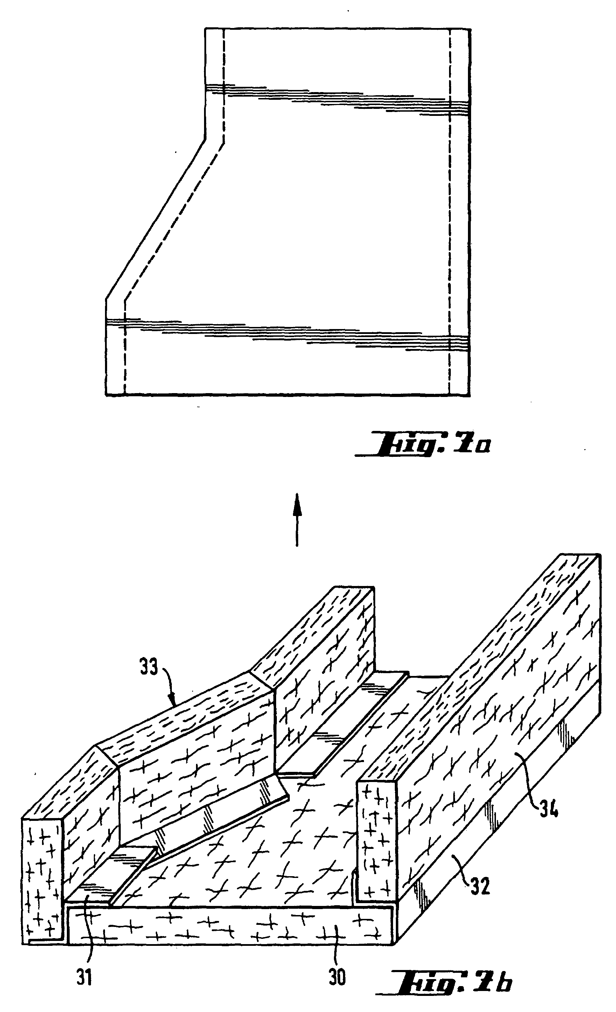

La figure 4 représente une gaine selon l'invention présentant une courbure, cette gaine comprenant une enveloppe 20, des panneaux isolants revêtus d'une feuille de protection sur leur face interne et rebordés 21, et des profilés d'assemblage 22 en Z pouvant éventuellement présenter des bords repliés. Les profilés d'assemblage utilisés sont cintrés en un ou plusieurs endroits afin de suivre la courbure de la gaine. Afin de cintrer ces profilés il suffit de couper les deux ailes des profilés suivant une génératrice choisie(trait mixte de la figure 5a et de la figure 6a) et de cintrer l'âme du profilé suivant cette génératrice (figures 5a et 5b, 6a et 6b). Les panneaux isolants sont également découpés ou cintrés pour suivre les courbes de la gaine.

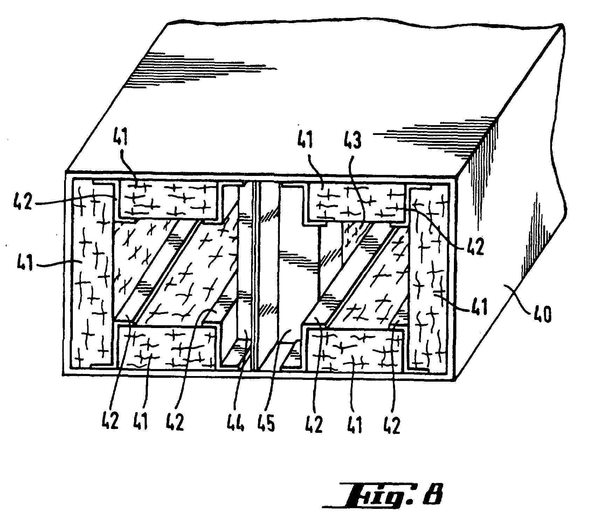

La figure 7a représente schématiquement en vue de dessus le contour d'une gaine selon l'invention présentant des changements de section. Le revêtement interne de cette gaine est effectué (figure 7b) en rentrant, par le côté le plus large de la gaine, le panneau isolant inférieur revêtu d'une feuille de protection sur sa face interne et rebordé 30 (enveloppe de la gaine non représentée), en posant, sur les bords longitudinaux de ce panneau, des profilés d'assemblage (31, 32) en Z, l'un des profilés 31 étant plié en plusieurs endroits (après coupure des ailes du profilé suivant des génératrices selon le principe illustré figures 5a, 5b, 6a et 6b), ces profilés présentant éventuellement des bords repliés, puis en posant les panneaux isolants latéraux (33, 34) sur les profilés avant d'intercaler à nouveau des profilés d'assemblage et de glisser le panneau supérieur (non représentés) sur ces profilés. Le panneau latéral 33 peut être en une seule pièce et présenter des pliures le long d'entailles en V préalablement pratiquées dans le panneau ou il peut s'agir de trois panneaux dont les bords sont découpés de façon à venir en contact les uns des autres, ces bords étant éventuellement joints par l'intermédiaire de profilés d'assemblage à section approximativement en T dont l'angle entre l'âme et chacune des ailes est adapté à l'angle entre les panneaux assemblés.

La gaine représentée en figure 8 comprend une enveloppe métallique 40, des panneaux isolants revêtus sur leur face interne d'une feuille de protection et rebordés 41, des profilés d'assemblage 42 en Z pour le montage des panneaux et une coulisse 43 constituée de deux panneaux isolants collés l'un à l'autre, la coulisse ainsi obtenue étant revêtue d'une feuille de protection sur ses deux faces principales, au moins un des bords transversaux à la direction d'écoulement de la gaine de cette coulisse étant enserré dans un assemblage de deux profilés (44, 45) en Z fixés l'un à l'autre en l'une de leurs ailes, par exemple par soudure ou collage.

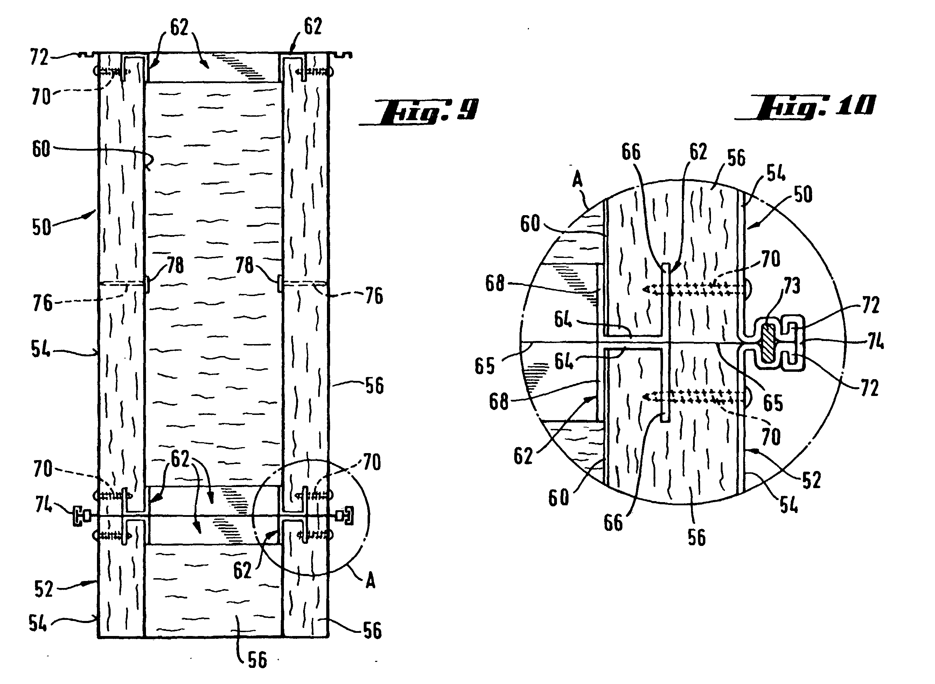

L'assemblage représenté en figure 9 comprend deux gaines à section rectangulaire 50, 52 (l'une d'elles étant partiellement représentée) assemblées bout à bout. Chaque gaine comprend une enveloppe 54 d'une épaisseur par exemple de 1 mm. Cette gaine est intérieurement revêtue de panneaux isolants 56 à base de laine de verre ou de roche d'une'épaisseur par exemple comprise entre 20 et 100 mm. La face interne des panneaux est éventuellement revêtue d'une couche anti-feu 60, sous forme par exemple d'un tissu de verre, cette couche permettant également le nettoyage de l'intérieur de la gaine. Chaque panneau 56 comprend deux profilés 62 d'une épaisseur par exemple de 0,7 mm, l'âme 64 de chaque profilé étant en contact direct avec une partie seulement d'une face transversale 65 du panneau, une des ailes 66 pénétrant dans le matériau isolant et l'autre aile 68 recouvrant une partie de la face interne du panneau (figure 10). Dans ce mode de réalisation, la création de ponts thermiques entre l'extérieur et l'intérieur de la gaine est évitée du fait notamment de l'absence de matériau métallique entre l'aile du profilé 66 insérée dans le panneau et l'enveloppe de la gaine.

Les panneaux peuvent par exemple être fixés par des vis (par exemple des vis auto-porteuses) 70 transperçant l'enveloppe de la gaine, une partie de la matière isolante et l'aile des profilés enfoncée dans la matière isolante (les ponts thermiques au niveau de ces éléments très ponctuels étant relativement peu importants). Les panneaux peuvent également être fixés à l'aide d'autres vis ou dispositifs (tels que les clavettes 76 et rondelles 78 représentées en figure 9) placés par exemple au milieu du panneau.

Les deux gaines peuvent être reliées l'une à l'autre, comme représenté plus précisément en figure 10. L'enveloppe de chaque gaine est repliée en chacune de ces extrémités de façon à former des rebords 72 permettant son assemblage avec une autre gaine. Les rebords de deux gaines adjacentes sont de forme symétrique par rapport au plan perpendiculaire à l'axe des gaines et dans l'espace délimité par ces rebords est placée une garniture d'étanchéité 73 ; un élément coulissant 74 maintient les rebords joints. De tels rebords peuvent être prévus sur l'extrémité de chaque face de la gaine.

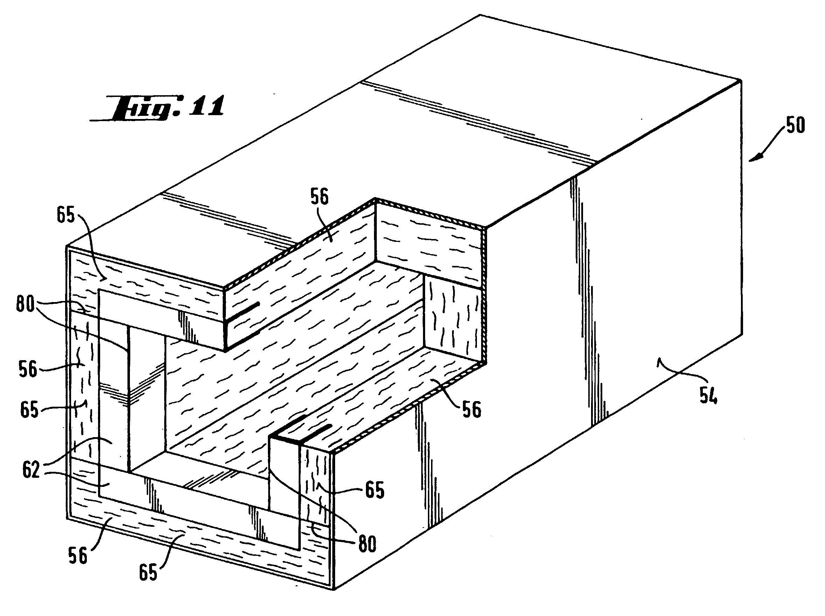

La gaine représentée en figure 11 est similaire à la gaine représentée en figure 9 (les éléments communs étant désignés par les mêmes références et cette gaine n'étant pas munie de vis ou de rebords pour l'assemblage, l'assemblage des panneaux se faisant par exemple par collage ou par des profilés non représentés). Dans ce mode de réalisation, on observe que le revêtement (les profilés) des panneaux de la gaine selon l'invention, ne couvre, sur certains panneaux, qu'une partie des arêtes transversales 80 tournées vers le canal d'écoulement de la gaine, cette partie étant essentiellement la partie des arêtes directement exposée à l'air en circulation dans la gaine.

La gaine selon l'invention peut être utilisée dans toute installation de ventilation et les panneaux isolants selon l'invention peuvent être utilisés dans tout type de gaine de ventilation.

## Revendications

1. Gaine de ventilation (50, 52) comprenant une enveloppe (1, 20, 40, 54) intérieurement revêtue d'au moins un panneau isolant (10, 11, 12, 13, 14, 15, 56), **caractérisée en ce que** ce panneau présente au moins un revêtement (7, 62) sur au moins une partie d'au moins une de ses arêtes transversales placées du côté du canal d'écoulement de la gaine, ce revêtement s'étendant sur au moins une partie de chacune des faces de part et d'autre de l'arête et étant intégré au panneau.

2. Gaine selon la revendication 1, **caractérisée en ce que** le panneau présente au moins un revêtement, sur sa face interne (2a), sous la forme d'une feuille de protection (7) rebordant ledit panneau en au moins une partie d'au moins un de ses côtés transversaux (26, 8).

3. Gaine selon l'une des revendications 1 ou 2, **caractérisée en ce que** le panneau (62) présente au moins un revêtement sous forme d'un profilé (62) en U dont l'âme (64) recouvre une partie d'un côté transversal (65) du panneau, dont l'une des ailes (66) pénètre dans le matériau isolant du panneau et dont l'autre aile (68) couvre une partie de la face interne du panneau.

4. Gaine selon l'une des revendications 1 à 3, **caractérisée en ce qu'**elle comprend en outre au moins un profilé d'assemblage en Z (3, 16, 22, 31, 32, 42, 44, 45) servant au maintien du ou des panneaux.

5. Gaine selon la revendication 4, **caractérisée en ce que** le profilé d'assemblage en Z (3) présente au moins une aile dont l'extrémité libre (4) est repliée vers l'extérieur.

6. Gaine selon l'une des revendications 4 ou 5, **caractérisée en ce qu'**elle présente une section rectangulaire ou carrée et comprend un ou plusieurs ensembles de quatre panneaux isolants maintenus par l'intermédiaire d'un ou plusieurs ensembles de quatre profilés d'assemblage en Z (3, 16, 22, 31, 32, 42, 44, 45).

7. Gaine selon l'une des revendications 1 à 6, **caractérisée en ce qu'**elle comprend au moins deux panneaux isolants consécutifs sur une même face de l'enveloppe, le maintien à la jonction de ces deux panneaux étant assuré par au moins un profilé d'assemblage en T (17).

8. Gaine selon l'une des revendications 1 à 7, **caractérisée en ce que** le ou les panneaux comprennent comme matériau isolant de la laine minérale.

9. Panneau isolant (10, 11, 12, 13, 14, 15, 56) destiné au revêtement interne d'une gaine de ventilation, **caractérisé en ce qu'**il présente au moins un revêtement (7, 62) sur au moins une partie d'au moins une de ses arêtes, ce revêtement s'étendant sur au moins une partie de chacune des faces de part et d'autre de l'arête et étant intégré au panneau.

10. Utilisation d'un panneau isolant (10, 11, 12, 13, 14, 15, 56) présentant au moins un revêtement (7, 62) sur au moins une partie d'au moins une de ses arêtes, ce revêtement s'étendant sur au moins une partie de chacune de ses faces de part et d'autre de l'arête et étant intégré au panneau, pour revêtir intérieurement une gaine de ventilation.

## Claims

1. Ventilation sleeve (50, 52) comprising a casing (1, 20, 40, 54) covered internally with at least one insulating panel (10, 11, 12, 13, 14, 15, 56), **characterised in that** the panel has at least one covering (7, 62) on at least one portion of at least one of its transverse edges arranged towards the flow channel of the sleeve, the covering extending over at least a portion of each of the faces on each side of the edge and being integrated in the panel.

2. Sleeve according to claim 1, **characterised in that** the panel has at least one covering, on its inner face (2a), in the form of a protective sheet (7) covering the panel in at least one portion of at least one of its transverse sides (26, 8).

3. Sleeve according to either claim 1 or claim 2, **characterised in that** the panel (62) has at least one covering in the form of a U-shaped sectional member (62), the web (64) of which covers a portion of a transverse side (65) of the panel, and one of the wings (66) of which penetrates the insulating material of the panel and the other wing (68) of which covers a portion of the inner face of the panel.

4. Sleeve according to any one of claims 1 to 3, **characterised in that** it also comprises at least one Z-shaped sectional assembly member (3, 16, 22, 31, 32, 42, 44, 45) used to hold the panel(s).

5. Sleeve according to claim 4, **characterised in that** the Z-shaped sectional assembly member (3) has at least one wing, the free end (4) of which is folded outwards.

6. Sleeve according to either claim 4 or claim 5, **characterised in that** it has a rectangular or square cross-section and comprises one or more sets of four insulating panels held by means of one or more sets of four Z-shaped sectional assembly members (3, 16, 22, 31, 32, 42, 44, 45).

7. Sleeve according to any one of claims 1 to 6, **characterised in that** it comprises at least two consecutive insulating panels on the same face of the casing, holding at the junction of those two panels being ensured by at least one T-shaped sectional assembly member (17).

8. Sleeve according to any one of claims 1 to 7, **characterised in that** the panel(s) comprise(s) mineral wool as the insulating material.

9. Insulating panel (10, 11, 12, 13, 14, 15, 56) for the internal covering of a ventilation sleeve, **characterised in that** it has at least one covering (7, 62) on at least one portion of at least one of its edges, the covering extending over at least a portion of each of the faces on each side of the edge and being integrated in the panel.

10. Use of an insulating panel (10, 11, 12, 13, 14, 15, 56) having at least one covering (7, 62) on at least one portion of at least one of its edges, the covering extending over at least a portion of each of its faces on each side of the edge and being integrated in the panel, for covering a ventilation sleeve internally.

## Patentansprüche

1. Luftführungsleitung (50, 52) mit einem mit mindestens einer Dämmplatte (10, 11, 12, 13, 14, 15, 56) innenverkleideten Mantel (1, 20, 40, 54), **dadurch gekennzeichnet, daß** die Platte mindestens eine Kaschierung (7, 62) auf mindestens einem Abschnitt von mindestens einer ihrer auf der Seite des Strömungskanals der Leitung angeordneten querverlaufenden Kanten aufweist, wobei sich die Kaschierung über mindestens einen Abschnitt einer jeden der Oberflächen beidseitig von der Kante erstreckt und in die Platte integriert ist.

2. Leitung nach Anspruch 1, **dadurch gekennzeichnet, daß** die Platte auf ihrer Innenfläche (2a) mindestens eine Kaschierung in Form einer Schutzfolie (7) aufweist, welche die Platte auf mindestens einem Abschnitt mindestens einer ihrer Querseiten (26, 8) ein-faßt.

3. Leitung nach einem der Ansprüche 1 oder 2, **dadurch gekennzeichnet, daß** die Platte (62) mindestens eine Kaschierung in Form eines U-förmigen Profils (62) aufweist, von dem der Steg (64) einen Abschnitt einer Querseite (65) der Platte bedeckt, einer der Schenkel (66) in das Isoliermaterial der Platte eindringt, und der andere Schenkel (68) einen Abschnitt der Innenfläche der Platte bedeckt.

4. Leitung nach einem der Ansprüche 1 bis 3, **dadurch gekennzeichnet, daß** sie des weite-ren mindestens ein Z-förmiges Montageprofil (3,16, 22, 31, 32, 42, 44, 45) aufweist, welches für den Halt der Platte/n dient.

5. Leitung nach Anspruch 4, **dadurch gekennzeichnet, daß** das Z-förmige Montageprofil (3) mindestens einen Schenkel aufweist, dessen freies Ende (4) nach außen hin umge-bogen ist.

6. Leitung nach einem der Ansprüche 4 oder 5, **dadurch gekennzeichnet, daß** sie einen rechteckigen oder quadratischen Querschnitt besitzt und einen oder mehrere Sätze von vier Dämmplatten aufweist, die mit Hilfe eines oder mehrerer Sätze von vier Z-förmi-gen Montageprofilen (3, 16, 22, 31, 32, 42, 44, 45) gehalten werden.

7. Leitung nach einem der Ansprüche 1 bis 6, **dadurch gekennzeichnet, daß** sie mindestens zwei aufeinanderfolgende Dämmplatten auf einer gleichen Oberfläche des Mantels aufweist, wobei der Halt an der Stoßfuge der beiden Platten mit Hilfe mindestens eines T-förmigen Montageprofils (17) bewirkt wird.

8. Leitung nach einem der Ansprüche 1 bis 7, **dadurch gekennzeichnet, daß** die Platte/n als Dämmaterial Mineralwolle aufweist/aufweisen.

9. Dämmplatte (10, 11, 12, 13, 14, 15, 56) für die Innenverkleidung einer Luftführungs-leitung, **dadurch gekennzeichnet, daß** sie mindestens eine Kaschierung (7, 62) auf min-destens einem Abschnitt von mindestens einer ihrer Kanten aufweist, wobei sich die Kaschierung über mindestens einen Abschnitt von jeder der Oberflächen beidseitig von der Kante erstreckt und in die Platte integriert ist.

10. Verwendung einer Dämmplatte (10, 11, 12, 13, 14, 15, 56), welche mindestens eine Kaschierung (7, 62) auf mindestens einem Abschnitt von mindestens einer ihrer Kanten aufweist, wobei sich die Kaschierung über mindestens einen Abschnitt von jeder ihrer Oberflächen beidseitig von der Kante erstreckt und in die Platte integriert ist, für die Innenverkleidung einer Luftführungsleitung.
